# EUROPEAN PATENT SPECIFICATION

(11) **EP 3 369 622 B1**
(45) Date of publication and mention of the grant of the patent: **23.08.2023**
(21) Application number: 16859862.1
(22) Date of filing: 26.10.2016
(51) Int. Cl.: B60Q 1/50, B60Q 1/26, B60Q 1/00

(54) **VEHICLE WITH AN ILLUMINATION DEVICE**
FAHRZEUG MIT BELEUCHTUNGSVORRICHTUNG
VÉHICULE AVEC DISPOSITIF D'ÉCLAIRAGE

(30) Priority: 27.10.2015 JP 2015211218; 27.10.2015 JP 2015211219; 27.10.2015 JP 2015211220
(43) Date of publication of application: 05.09.2018
(73) Proprietor: Koito Manufacturing Co., Ltd., Tokyo 108-8711 (JP)
(72) Inventor: TATARA Naoki, Shizuoka-shi Shizuoka 424-8764 (JP); OKAMURA Toshihiro, Shizuoka-shi Shizuoka 424-8764 (JP); MASUDA Takeshi, Shizuoka-shi Shizuoka 424-8764 (JP)
(74) Representative: Cabinet Beau de Loménie
(86) International application number: PCT/JP2016/081784
(87) International publication number: WO 2017/073633

(56) References cited:
- EP-A1- 3 357 754
- DE-A1-102011 113 913
- DE-A1-102013 018 784
- DE-A1-102015 205 630
- JP-A- S60 174 338
- JP-A- S60 174 338
- JP-A- 2005 219 566
- JP-A- 2012 076 714
- JP-A- 2015 071 340
- JP-A- 2015 071 340
- JP-A- 2015 162 005
- Anonymous: "Taxonomy and Definitions for Terms Related to On-Road Motor Vehicle Automated Driving Systems", Surface Vehicle Information Report SAE-J3016?, 1 January 2014 (2014-01-01), pages 1-12, XP055627740,

## Description

### Technical Field

The present invention relates to a vehicle capable of travelling in an automatic driving mode including a vehicle illumination device.

### Background Art

Currently, research on the automatic driving technique of automobiles has been actively conducted in each country, and each country is examining laws so as to enable a vehicle (hereinafter, a "vehicle" refer to an automobile) to travel in an automatic driving mode on public roads. Here, in the automatic driving mode, a vehicle system automatically controls the travelling of a vehicle. Specifically, in the automatic driving mode, the vehicle system performs at least one of a steering control (control of the vehicle in the travelling direction), a brake control and an accelerator control (control of the braking and acceleration/deceleration of the vehicle) based on various information obtained from a camera, a sensor, and a radar or the like. On the other hand, in a manual driving mode described below, a driver controls the travelling of a vehicle, as in most of conventional vehicles. Specifically, in the manual driving mode, the travelling of the vehicle is controlled according to an operation (steering operation, braking operation, accelerator operation) of a driver, and the vehicle system does not automatically perform the steering control, the brake control and the accelerator control. Meanwhile, the driving mode of the vehicle is not a concept existing only in some vehicles but a concept existing in all vehicles including conventional type vehicles having no automatic driving function. For example, the driving mode of the vehicle is classified according to a vehicle control method or the like.

Thus, in the future, it is expected that vehicles (hereinafter, suitably referred to as "automatic driving vehicle") travelling in the automatic driving mode and vehicles (hereinafter, suitably referred to as "manual driving vehicle") travelling in the manual driving mode coexist on public roads. In particular, on the road where the automatic driving vehicle and the manual driving vehicle coexist, it is desirable that information relating to the automatic driving is presented to other vehicles and pedestrians or the like.

For example, if a driver of other vehicle travelling behind an own vehicle can grasp information relating to the automatic driving of the own vehicle, the driver is considered to operate a steering wheel carefully or with confidence when overtaking the own vehicle. Further, if a pedestrian trying to cross a crosswalk can grasp information relating to the automatic driving of the own vehicle approaching the crosswalk, the pedestrian is considered to safely cross the crosswalk.

Patent Document 1 discloses an automatic follow-up travelling system in which a following vehicle travels so as to automatically follow a preceding vehicle. In the automatic follow-up travelling system, each of the preceding vehicle and the following vehicle has a display device, character information for preventing interruption of other vehicle between the preceding vehicle and the following vehicle is displayed on the display device of the preceding vehicle, and character information indicating the automatic follow-up travelling mode is displayed on the display device of the following vehicle.
DE 10 2013 018784 discloses a vehicle with an illumination device which may be controlled as a function of automated driving, according to the pre-characterizing part of claim 1.
JP 2015 071340 discloses a vehicle with a display apparatus enabling recognition of an automatic driving.
JP 2015 162005 discloses a system for notifying surroundings of a travelling state of a vehicle.
DE 10 2011 113913 discloses a vehicle device with a vehicle emblem.
DE 10 2015 205 630 discloses a cover device for a body component of a vehicle.
JP S60 174338 discloses a lighting device for a car, that illuminates the lower part of the car.

### Prior Art Document

### Patent Document

Patent Document 1: JP-A-S9-277887

### Summary of the Invention

### Problem to be Solved by the Invention

However, in Patent Document 1, it is an object to prevent other vehicle from interposing between a preceding vehicle and a following vehicle, but character information for preventing the interposing cannot be visually recognized from the front of the preceding vehicle.

The present invention aims to provide a vehicle comprising a vehicle illumination device capable of presenting information relating to automatic driving of an own vehicle toward an outside of the own vehicle and over an entire circumference of the own vehicle in a horizontal direction.

### Means for Solving the Problem

A vehicle according to the present invention is defined in claim 1.

According to the above configuration, it is possible to provide the vehicle illumination device capable of presenting the information relating to the automatic driving of the own vehicle toward the outside of the own vehicle and over the entire circumference of the own vehicle in the horizontal direction.

The vehicle illumination device may further include an illumination control unit configured to set an illumination state of the illumination unit to a predetermined illumination state in accordance with the information relating to the automatic driving of the vehicle.

According to the above configuration, since the illumination control unit sets the illumination state of the illumination unit to the predetermined illumination state in accordance with the information relating to the automatic driving of the vehicle, pedestrians or other vehicles or the like around the vehicle can visually recognize the information relating to the automatic driving of the vehicle by the predetermined illumination state of the illumination unit.

The illumination control unit may be configured to turn on or turn off predetermined light emitting areas of the illumination unit in accordance with the driving mode of the vehicle.

According to the above configuration, pedestrians or other vehicles or the like around the vehicle can visually recognize the information relating to the automatic driving of the vehicle by the illumination state of the illumination unit.

The vehicle illumination device may further include an illumination control unit configured to set an illumination state of the illumination unit to a predetermined illumination state in accordance with illuminance of surrounding environment of the vehicle.

According to the above configuration, since the illumination control unit sets the illumination state of the illumination unit to the predetermined illumination state in accordance with the illuminance of the surrounding environment of the vehicle, pedestrians or other vehicles or the like around the vehicle can visually recognize the illumination unit when the illuminance of the surrounding environment is high, and are prevented from being dazzled by the light irradiated from the illumination unit when the illuminance of the surrounding environment is low.

The information relating to the automatic driving of the vehicle includes information indicating a transition state of a driving mode of the vehicle.

According to the above configuration, pedestrians or other vehicles or the like around the vehicle can visually recognize the transition of the driving mode of the vehicle.

The illumination unit may be disposed on a vehicle body roof of the vehicle.

The illumination unit may be disposed on a vehicle body side surface of the vehicle.

The illumination unit may include:
a first illumination part disposed on a left surface of the vehicle;
a second illumination part disposed on a right surface of the vehicle;
a third illumination part disposed on a front surface of the vehicle; and
a fourth illumination part disposed on a rear surface of the vehicle.

The illumination unit may be arranged to surround the vehicle body side surface.

The illumination unit may include a plurality of illumination parts, and
each of the plurality of illumination parts may be disposed at a corresponding one of four corners of the vehicle body side surface.

The illumination unit may be disposed on a bottom surface of the vehicle facing a road surface, and
the illumination unit may be configured to irradiate light over the entire circumference in the horizontal direction via the road surface.

### Effects of the Invention

According to the present invention, it is possible to provide a vehicle with a vehicle illumination device capable of presenting the information relating to the automatic driving of an own vehicle toward the outside of the own vehicle and over the entire circumference of the own vehicle in the horizontal direction.

### Brief Description of Drawings

FIG. 1A is a top view of a vehicle on which a vehicle illumination device according to a first embodiment of the present invention (hereinafter, simply referred to as "a first embodiment") is mounted.
FIG. 1B is a side view of the vehicle shown in FIG. 1A.
FIG. 2 is a block diagram of a vehicle system including the vehicle illumination device according to the first embodiment.
FIG. 3 is a flowchart showing a processing for setting an illumination state of an illumination unit to illumination states S1 to S4 according to an operation mode of the vehicle.
FIG. 4 is a view showing an example of an illumination unit having a plurality of light emitting areas.
FIG. 5 is a flowchart showing a processing for changing luminous intensity of the illumination unit according to illuminance of the surrounding environment of the vehicle.
FIG. 6A is a top view of a vehicle on which a vehicle illumination device according to a first modification of the first embodiment is mounted.
FIG. 6B is a side view of the vehicle shown in FIG. 6A.
FIG. 7A is a top view of a vehicle on which a vehicle illumination device according to a second modification of the first embodiment is mounted.
FIG. 7B is a side view of the vehicle shown in FIG. 7A.
FIG. 8 is a perspective view of a vehicle on which a vehicle illumination device according to a third modification of the first embodiment is mounted.
FIG. 9A is a left side view of a vehicle on which a vehicle illumination device according to a second embodiment of the present invention (hereinafter, simply referred to as "a second embodiment") is mounted.
FIG. 9B is a front view of the vehicle shown in FIG. 9A.
FIG. 9C is a right side view of the vehicle shown in FIG. 9A.
FIG. 9D is a rear view of the vehicle shown in FIG. 9A.
FIG. 10A is a left side view of a vehicle on which a vehicle illumination device according to a first modification of the second embodiment is mounted.
FIG. 10B is a front view of the vehicle shown in FIG. 10A.
FIG. 10C is a right side view of the vehicle shown in FIG. 10A.
FIG. 10D is a rear view of the vehicle shown in FIG. 10A.
FIG. 11A is a left side view of a vehicle on which a vehicle illumination device according to a second modification of the second embodiment is mounted.
FIG. 11B is a front view of the vehicle shown in FIG. 11A.
FIG. 11C is a right side view of the vehicle shown in FIG. 11A.
FIG. 11D is a rear view of the vehicle shown in FIG. 11A.
FIG. 12A is a left side view of a vehicle on which a vehicle illumination device according to a third embodiment of the present invention (hereinafter, simply referred to as "a third embodiment") is mounted.
FIG. 12B is a front view of the vehicle shown in FIG. 12A.
FIG. 12C is a right side view of the vehicle shown in FIG. 12A.
FIG. 12D is a rear view of the vehicle shown in FIG. 12A.

### Description of Embodiments

### (First Embodiment)

Hereinafter, a first embodiment will be described with reference to the drawings. Incidentally, for the sake of convenience of explanation, the explanation of members having the same reference numerals as those already described in the description of the present embodiment will be omitted. Further, for the sake of convenience of explanation, dimensions of each member shown in the drawings may be different from actual dimensions of each member.

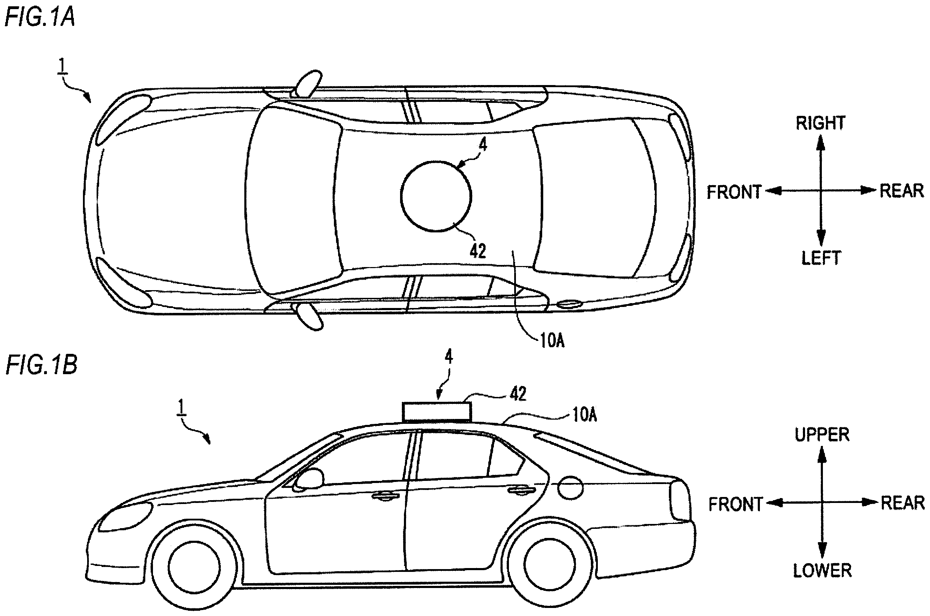

Further, for the sake of convenience of explanation, "a left-right direction," "a front-rear direction," and "an upper-lower direction" are appropriately mentioned in the description of the present embodiment. These directions refer to the relative directions set for a vehicle 1 shown in FIGS. 1A and 1B. Here, "the upper-lower direction" refers to a direction including "an upper direction" and "a lower direction." "The front-rear direction" refers to a direction including "a front direction" and "a rear direction." "The left-right direction" refers to a direction including "a left direction" and "a right direction."

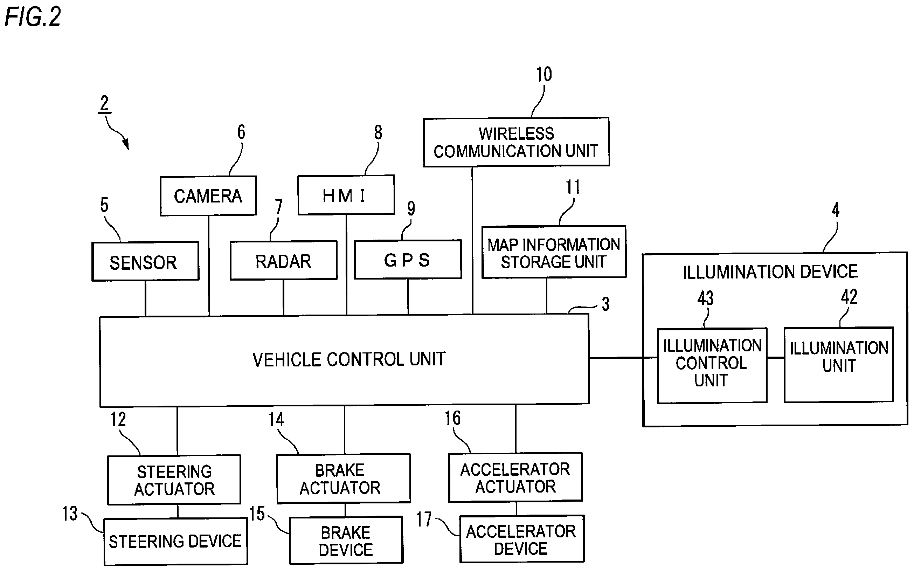

FIGS. 1A and 1B show the vehicle 1 on which a vehicle illumination device 4 (hereinafter, referred to as the "illumination device 4") according to the first embodiment is mounted. FIG. 1A shows a top view of the vehicle 1, and FIG. 1B shows a side view of the vehicle 1. The vehicle 1 is an automobile capable of travelling in an automatic driving mode and includes the illumination device 4. The illumination device 4 includes an illumination unit 42 and an illumination control unit 43 (see FIG. 2), and the illumination unit 42 of the illumination device 4 is disposed on a vehicle body roof 10A of the vehicle 1 (see FIGS. 1A and 1B). Further, the illumination unit 42 is configured to irradiate light toward the outside of the vehicle 1 and over the entire circumference (360 degrees) of the illumination unit 42 in a horizontal direction. Here, the horizontal direction refers to a direction including the front-rear direction and the left-right direction and corresponds to a plane direction perpendicular to the upper-lower direction.

Next, a vehicle system 2 of the vehicle 1 will be described with reference to FIG. 2. FIG. 2 shows a block diagram of the vehicle system 2. As shown in FIG. 2, the vehicle system 2 includes a vehicle control unit 3, the illumination device 4, a sensor 5, a camera 6, a radar 7, a HMI (Human Machine Interface) 8, a GPS (Global Positioning System) 9, a wireless communication unit 10, and a map information storage unit 11. The vehicle system 2 further includes a steering actuator 12, a steering device 13, a brake actuator 14, a brake device 15, an accelerator actuator 16, and an accelerator device 17.

The vehicle control unit 3 is configured to control the travelling of the vehicle 1. The vehicle control unit 3 is configured by, for example, an electronic control unit (ECU: Electronic Control Unit). The electronic control unit includes a microcontroller having a processor and a memory, and other electronic circuits (e.g., transistors, etc.). The processor is, for example, a CPU (Central Processing Unit), an MPU (Micro Processing Unit) and/or a GPU (Graphics Processing Unit). The memory includes a ROM (Read Only Memory) in which various vehicle control programs (e.g., an artificial intelligence (AI) program for automatic driving, etc.) are stored, and a RAM (Random Access Memory) in which various vehicle control data are temporarily stored. The processor is configured to develop, on the RAM, a program designated from the various vehicle control programs stored in the ROM and execute various processes in cooperation with the RAM.

As described above, the illumination device 4 includes the illumination unit 42 and the illumination control unit 43. The illumination unit 42 includes one or more light emitting elements such as an LED (Light Emitting Diode) or a laser and is configured to irradiate light toward the outside of the vehicle 1. The illumination control unit 43 is configured by an electronic control unit (ECU). The illumination control unit 43 is configured to set an illumination state ( illumination color, luminous intensity, light emitting area or blinking cycle, etc.) of the illumination unit 42 to a predetermined illumination state in accordance with information relating to the automatic driving of the vehicle 1. Further, the electronic control unit is electrically connected to a power supply (not shown) and includes a microcontroller having a processor such as a CPU or an MPU and a memory such as a ROM and a RAM, and other electronic circuits (e.g., a drive circuit such as an LED driver). In the first embodiment, the vehicle control unit 3 and the illumination control unit 43 are provided as a separate component. However, the vehicle control unit 3 and the illumination control unit 43 may be integrally configured. That is, the illumination control unit 43 and the vehicle control unit 3 may be configured by a single electronic control unit.

The illumination control unit 43 may be configured to turn on or turn off the illumination unit 42. Alternatively, the illumination control unit 43 may set the illumination color of the illumination unit 42 to a predetermined illumination color (e.g., white, green, blue, etc). Further, the illumination control unit 43 may set the light emitting area of the illumination unit 42 to a predetermined light emitting area (e.g., the half of the volume of the illumination unit 42 may be set as the light emitting area). Furthermore, the illumination control unit 43 may set the blinking cycle of the illumination unit 42 to a predetermined blinking cycle T.

For example, when the information relating to the automatic driving of the vehicle 1 is information indicating a driving mode of the vehicle 1, the vehicle control unit 3 generates a mode signal indicating a driving mode of the vehicle 1 and transmits the mode signal to the illumination control unit 43. The illumination control unit 43 sets the illumination state of the illumination unit 42 to a predetermined illumination state based on the received mode signal. Meanwhile, the illumination control unit 43 and the vehicle control unit 3 may be configured by the same electronic control unit.

The sensor 5 includes an acceleration sensor, a speed sensor, a gyro sensor, and the like. The sensor 5 is configured to detect a travelling condition of the vehicle 1 and output the travelling condition information to the vehicle control unit 3. The sensor 5 may further include a seating sensor configured to detect whether a driver is sitting on a driver's seat, a face orientation sensor configured to detect a direction of a driver's face, an external weather sensor configured to detect external weather condition, a human sensor configured to detect whether a person is inside a vehicle, and the like. Furthermore, the sensor 5 may include an illuminance sensor configured to detect the illuminance of the surrounding environment of the vehicle 1.

The camera 6 is, for example, a camera including an imaging device such as a CCD (Charge-Coupled Device) and CMOS (complementary MOS). The radar 7 is a millimeter wave radar, a microwave radar, a laser radar, or the like. The camera 6 and the radar 7 are configured to detect the surrounding environment (other vehicles, pedestrians, road shapes, traffic signs, obstacles, etc.) of the vehicle 1 and output the surrounding environment information to the vehicle control unit 3.

The HMI 8 includes an input unit configured to receive an input operation from a driver and an output unit configured to output the travelling information and the like to the driver. The input unit includes a steering wheel, an accelerator pedal, a brake pedal, a driving mode changeover switch for switching the driving mode of the vehicle 1, and the like. The output unit is a display for displaying various travelling information.

The GPS 9 is configured to acquire current position information of the vehicle 1 and output the acquired current position information to the vehicle control unit 3. The wireless communication unit 10 is configured to receive travelling information of other vehicle around the vehicle 1 from other vehicle and transmit the travelling information of the vehicle 1 to other vehicle (inter-vehicle communication). Further, the wireless communication unit 10 is configured to receive infrastructure information from infrastructure equipment such as traffic lights and sign lamps and transmit the travelling information of the vehicle 1 to the infrastructure equipment (road-to-vehicle communication). The map information storage unit 11 is an external storage device such as a hard disk drive in which map information is stored. The map information storage unit 11 is configured to output the map information to the vehicle control unit 3.

When the vehicle 1 travels in an automatic driving mode, the vehicle control unit 3 automatically generates at least one of a steering control signal, an accelerator control signal and a brake control signal based on the travelling condition information, the surrounding environment information, the current position information, the map information, and the like. The steering actuator 12 is configured to receive the steering control signal from the vehicle control unit 3 and control the steering device 13 based on the received steering control signal. The brake actuator 14 is configured to receive the brake control signal from the vehicle control unit 3 and control the brake device 15 based on the received brake control signal. The accelerator actuator 16 is configured to receive the accelerator control signal from the vehicle control unit 3 and control the accelerator device 17 based on the received accelerator control signal. Thus, in the automatic driving mode, the travelling of the vehicle 1 is automatically controlled by the vehicle system 2.

On the other hand, when the vehicle 1 travels in a manual driving mode, the vehicle control unit 3 generates a steering control signal, an accelerator control signal and a brake control signal in accordance with a manual operation of a driver on the brake pedal and the steering wheel. Thus, in the manual driving mode, the steering control signal, the accelerator control signal and the brake control signal are generated by the manual operation of the driver, so that the travelling of the vehicle 1 is controlled by the driver.

Next, a driving mode of the vehicle 1 will be described. The driving mode includes an automatic driving mode and a manual driving mode. The automatic driving mode includes a fully automatic driving mode, an advanced driving support mode, and a driving support mode. In the fully automatic driving mode, the vehicle system 2 automatically performs all of the travelling controls of the steering control, the brake control and the accelerator control, and the driver is not in a state where it is possible to drive the vehicle 1. In the advanced driving support mode, the vehicle system 2 automatically performs all of the travelling controls of the steering control, the brake control and the accelerator control, and the driver does not drive the vehicle 1 although the driver is in a state where it is possible to drive the vehicle 1. In the driving support mode, the vehicle system 2 automatically performs a part of the travelling controls of the steering control, the brake control and the accelerator control, and the driver drives the vehicle 1 under the driving support of the vehicle system 2. On the other hand, in the manual driving mode, the vehicle system 2 does not automatically perform the travelling controls, and the driver drives the vehicle 1 without the driving support of the vehicle system 2.

Further, the driving mode of the vehicle 1 may be switched by operating a driving mode changeover switch. In this case, the vehicle control unit 3 switches the driving mode of the vehicle 1 among four driving modes (the fully automatic driving mode, the advanced driving support mode, the driving support mode, and the manual driving mode) in accordance with the operation of the driver on the driving mode changeover switch. Further, the driving mode of the vehicle 1 may be automatically switched based on the information relating to a travel-allowed section where the travelling of an automatic driving vehicle is allowed or a travel-prohibited section where the travelling of the automatic driving vehicle is prohibited or the information relating to the external weather condition. In this case, the vehicle control unit 3 switches the driving mode of the vehicle 1 based on such information. Furthermore, the driving mode of the vehicle 1 may be automatically switched by using a seating sensor, a face orientation sensor, or the like. In this case, the vehicle control unit 3 switches the driving mode of the vehicle 1 based on the output signal from the seating sensor or the face orientation sensor.

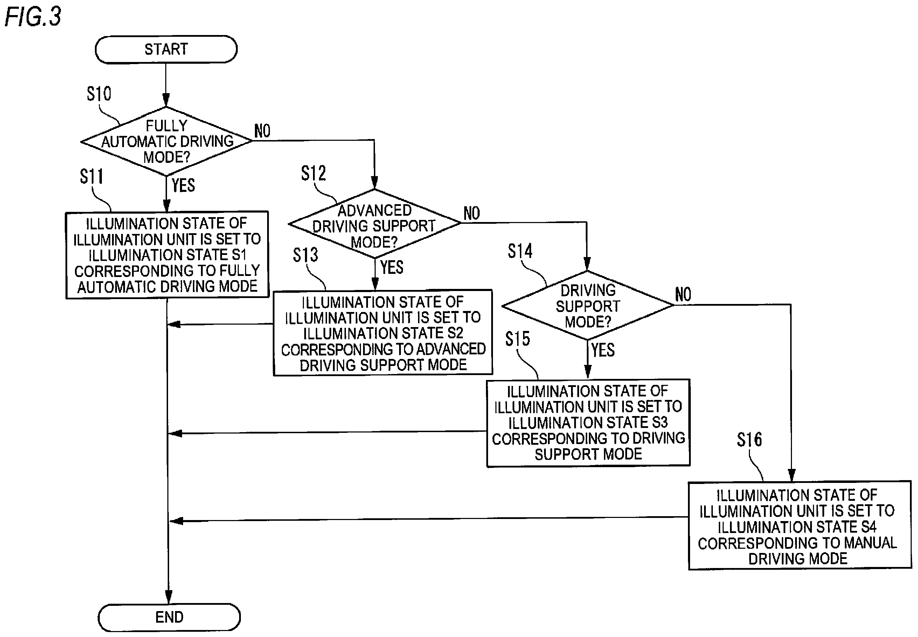

Subsequently, a process of setting the illumination state of the illumination unit 42 to one of illumination states S1 to S4 in accordance with the driving mode of the vehicle 1, which is an example of the information relating to the automatic driving, will be described with reference to FIG. 3. First, the illumination control unit 43 receives a mode signal indicating the driving mode of the vehicle 1 from the vehicle control unit 3. Then, the illumination control unit 43 determines whether the received mode signal indicates the fully automatic driving mode (Step S10). When it is determined that the mode signal indicates the fully automatic driving mode (YES in Step S10), the illumination control unit 43 sets the illumination state of the illumination unit 42 to the illumination state S1 corresponding to the fully automatic driving mode (Step S11).

On the other hand, when it is determined that the mode signal does not indicate the fully automatic driving mode (NO in Step S10), the illumination control unit 43 determines whether the mode signal indicates the advanced driving support mode (Step S12). When it is determined that the mode signal indicates the advanced driving support mode (YES in Step S12), the illumination control unit 43 sets the illumination state of the illumination unit 42 to the illumination state S2 corresponding to the advanced driving support mode (Step S13).

On the other hand, when it is determined that the mode signal does not indicate the advanced driving support mode (NO in Step S12), the illumination control unit 43 determines whether the mode signal indicates the driving support mode (Step S14). When it is determined that the mode signal indicates the driving support mode (YES in Step S14), the illumination control unit 43 sets the illumination state of the illumination unit 42 to the illumination state S3 corresponding to the driving support mode (Step S15).

On the other hand, when it is determined that the mode signal does not indicate the driving support mode (NO in Step S14), the illumination control unit 43 determines that the mode signal indicates the manual driving mode, and sets the illumination state of the illumination unit 42 to the illumination state S4 corresponding to the manual driving mode (Step S16). In this way, the main process is ended. Further, every time the illumination control unit 43 receives the mode signal from the vehicle control unit 3, the main process is executed.

According to the first embodiment, the illumination device 4 can present the driving mode (information relating to the automatic driving) of the vehicle 1 toward the outside (in particular, pedestrians or other vehicles or the like around the vehicle 1) of the vehicle 1 and over the entire circumference of the vehicle 1 in the horizontal direction.

Further, according to the first embodiment, the illumination state of the illumination unit 42 is set to one of the illumination states S1 to S4 in accordance with the driving mode of the vehicle 1, so that pedestrians or other vehicles or the like around the vehicle 1 can visually recognize the driving mode of the vehicle 1 by the illumination states S1 to S4 of the illumination unit 42. For example, since the illumination state of the illumination unit 42 is changed from the illumination state S2 to the illumination state S3 when the driving mode is changed from the advanced driving support mode to the driving support mode, the pedestrians or other vehicles or the like around the vehicle 1 can grasp that the driving mode of the vehicle 1 is changed from the advanced driving support mode to the driving support mode.

### <Change in Illumination State: Turn On/Off of Illumination Unit 42>

Subsequently, as an example of changing the illumination state of the illumination unit 42, an example in which the illumination control unit 43 turns on and off the illumination unit 42 will be described, said example being however not part of the present invention. First, a case (hereinafter, referred to as "Case 1") where the illumination control unit 43 turns on the illumination unit 42 when the driving mode of the vehicle 1 is the fully automatic driving mode will be described. In this case, the illumination control unit 43 turns on the illumination unit 42 in the illumination state S1 shown in FIG. 3 and turns off the illumination unit 42 in the illumination states S2 to S4. In the Case 1, pedestrians or other vehicles or the like around the vehicle 1 can visually recognize that the driving mode of the vehicle 1 is the fully automatic driving mode.

Subsequently, a case (Case 2) where the illumination control unit 43 turns on the illumination unit 42 when the driving mode of the vehicle 1 is the fully automatic driving mode or the advanced driving support mode will be described. In this case, the illumination control unit 43 turns on the illumination unit 42 in the illumination states S1 and S2 and turns off the illumination unit 42 in the illumination states S3 and S4. In the Case 2, pedestrians or other vehicles or the like around the vehicle 1 can visually recognize that the driving mode of the vehicle 1 is the fully automatic driving mode or the advanced driving support mode.

Further, a case (Case 3) where the illumination control unit 43 turns on the illumination unit 42 when the driving mode of the vehicle 1 is the fully automatic driving mode, the advanced driving support mode or the driving support mode will be described. In this case, the illumination control unit 43 turns on the illumination unit 42 in the illumination states S1 to S3 and turns off the illumination unit 42 in the illumination state S4. In the Case 3, pedestrians or other vehicles or the like around the vehicle 1 can visually recognize that the driving mode of the vehicle 1 is the fully automatic driving mode, the advanced driving support mode or the driving support mode (i.e., the automatic driving mode). In other words, other vehicles or the like can visually recognize that the driving mode of the vehicle 1 is the automatic driving mode.

The turn on/off states of the illumination states S1 to S4 in each of the Cases 1 to 3 are summarized in the following table.

**[Table 1]**

| | Case 1 | Case 2 | Case 3 |
|---|---|---|---|
| Illumination State S1 | Turn On | Turn On | Turn On |
| Illumination State S2 | Turn Off | Turn On | Turn On |
| Illumination State S3 | Turn Off | Turn Off | Turn On |
| Illumination State S4 | Turn Off | Turn Off | Turn Off |

Meanwhile, in the Case 1, the illumination control unit 43 turns on the illumination unit 42 in the illumination state S1 and turns off the illumination unit 42 in the illumination states S2 to S4. However, on the contrary, the illumination control unit 43 may turn off the illumination unit 42 in the illumination state S1 and turn on the illumination unit 42 in the illumination states S2 to S4. Also in this case, pedestrians or other vehicles or the like around the vehicle 1 can visually recognize that the driving mode of the vehicle 1 is the fully automatic driving mode. Similarly, in the Case 2, the illumination control unit 43 may turn off the illumination unit 42 in the illumination states S1, S2 and turn on the illumination unit 42 in the illumination states S3, S4. Further, in the Case 3, the illumination control unit 43 may turn off the illumination unit 42 in the illumination states S1 to S3 and turn on the illumination unit 42 in the illumination state S4. Also in these cases, it is possible to obtain the same effects as described above. Further, it is preferable that the illumination color of the illumination unit 42 is green when the illumination unit 42 is turned on.

### <Change in Illumination State: Light Emitting Area of Illumination Unit 42>

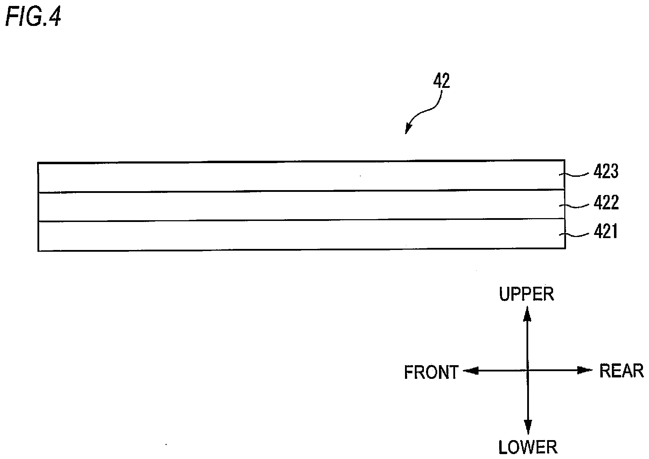

Next, as another example of changing the illumination state of the illumination unit 42, an example in which the illumination control unit 43 sets the light emitting area of the illumination unit 42 to a predetermined light emitting area will be described. As shown in FIG. 4, the illumination unit 42 has three light emitting areas 421 to 423. In this example, a light emitting element (not shown) such as an LED which turns on and off independently is disposed in each of the light emitting areas 421 to 423.

In this case, the illumination control unit 43 may turn on the light emitting areas 421 to 423 in the illumination state S1, turn on the light emitting areas 421, 422 in the illumination state S2, turn on the light emitting area 421 in the illumination state S3, and turn off the light emitting areas 421 to 423 in the illumination state S4. In this way, the light emitting area of the illumination unit 42 is different in each of the illumination states S1 to S4.

According to the above configuration, since the light emitting area of the illumination unit 42 is set to a predetermined light emitting area in accordance with the automatic driving mode of the vehicle 1, it is possible to provide the illumination device 4 capable of displaying the information indicating the driving mode of the vehicle 1 toward pedestrians or other vehicles or the like around the vehicle 1. Here, the change in the light emitting area is merely an example. An example where the light emitting area is variously changed can be applied, so long as the light emitting area of the illumination unit 42 is changed in accordance with the automatic driving mode of the vehicle 1.

### <Change in Illumination State: Illumination Color of Illumination Unit 42>

Next, as another example of changing the illumination state of the illumination unit 42, an example in which the illumination control unit 43 changes the illumination color of the illumination unit 42 will be described. In this example, a plurality of (e.g., three) light emitting elements (not shown) such as LEDs is arranged in the illumination unit 42, and the light emitted from each light emitting element has a different emission color.

In this case, the illumination control unit 43 may set the illumination color of the illumination unit 42 to white in the illumination state S1, set the illumination color of the illumination unit 42 to green in the illumination state S2, set the illumination color of the illumination unit 42 to blue in the illumination state S3, set the illumination color of the illumination unit 42 to red in the illumination state S4, or turn off the illumination unit 42 (the illumination color is black). In this way, the illumination color of the illumination unit 42 is different in each of the illumination states S1 to S4.

In this way, since the illumination color of the illumination unit 42 is changed in accordance with the driving mode of the vehicle 1, it is possible to provide the illumination device 4 capable of displaying the information indicating the driving mode of the vehicle 1 toward pedestrians or other vehicles or the like around the vehicle 1. Here, the change in the illumination color is merely an example. An example where the illumination color is variously changed can be applied, so long as the illumination color of the illumination unit 42 is changed in accordance with the driving mode of the vehicle 1.

### <Change in Illumination State: Blinking Cycle of Illumination Unit 42>

Further, as another example of changing the illumination state of the illumination unit 42, the illumination control unit 43 may change the blinking cycle (strictly speaking, the blinking cycle of light emitted from the illumination unit 42) of the illumination unit 42. At this time, the illumination control unit 43 may set the blinking cycle of the illumination unit 42 to T1 in the illumination state S1, set the blinking cycle of the illumination unit 42 to T2 in the illumination state S2, set the blinking cycle of the illumination unit 42 to T3 in the illumination state S3, and set the blinking cycle of the illumination unit 42 to T4 in the illumination state S4.

### <Change in Illumination State: Luminous Intensity of Illumination Unit 42>

Furthermore, as another example of changing the illumination state of the illumination unit 42, the illumination control unit 43 may change the luminous intensity of the illumination unit 42. At this time, the illumination control unit 43 may set the luminous intensity of the illumination unit 42 to I1 in the illumination state S1, set the luminous intensity of the illumination unit 42 to I2 in the illumination state S2, set the luminous intensity of the illumination unit 42 to I3 in the illumination state S3, and set the luminous intensity of the illumination unit 42 to I4 in the illumination state S4.

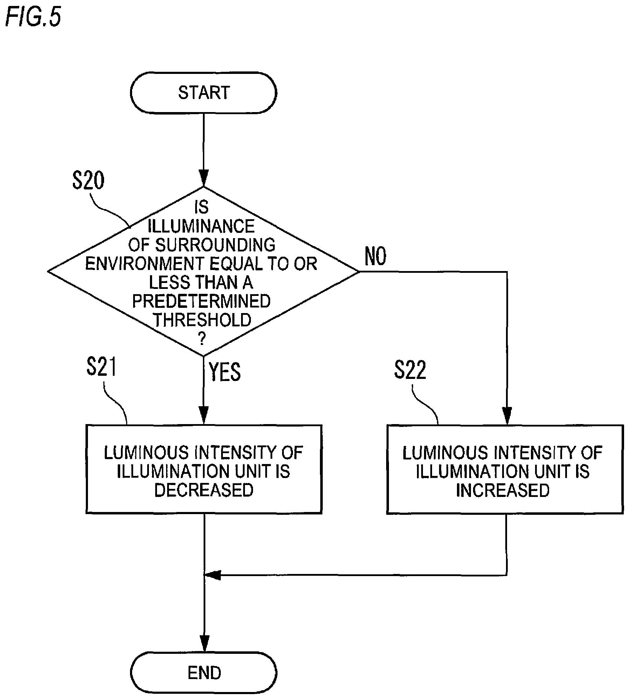

Next, a process of changing the luminous intensity of the illumination unit 42 in accordance with the illuminance of the surrounding environment of the vehicle 1 will be described with reference to FIG. 5. First, the vehicle control unit 3 determines whether the illuminance of the surrounding environment of the vehicle 1 is equal to or less than a predetermined threshold value by using an illuminance sensor or the like (Step S20). When it is determined that the illuminance of the surrounding environment is equal to or less than a predetermined threshold value (YES in Step S20), the vehicle control unit 3 generates a first illumination control signal and transmits the first illumination control signal to the illumination control unit 43. Then, the illumination control unit 43 decreases the luminous intensity of the illumination unit 42 based on the first illumination control signal. In other words, the illumination control unit 43 sets the luminous intensity of the illumination unit 42 to the predetermined luminous intensity I1 (Step S21).

On the other hand, when it is determined that the illuminance of the surrounding environment is greater than the predetermined threshold value (NO in Step S22), the vehicle control unit 3 generates a second illumination control signal and transmits the second illumination control signal to the illumination control unit 43. Then, the illumination control unit 43 increases the luminous intensity of the illumination unit 42 based on the second illumination control signal. In other words, the illumination control unit 43 sets the luminous intensity of the illumination unit 42 to the predetermined luminous intensity I2 (Step S22). Here, the predetermined luminous intensity I2 is greater than the predetermined luminous intensity I1. Further, the predetermined threshold value can be appropriately set.

In this way, since the illumination control unit 43 sets the luminous intensity of the illumination unit 42 to the predetermined luminous intensity I1 or I2 in accordance with the illuminance of the surrounding environment of the vehicle 1, pedestrians or other vehicles or the like around the vehicle 1 can reliably visually recognize the illumination unit 42 when the illuminance of the surrounding environment is high (daytime, etc.), and are prevented from being dazzled by the light irradiated from the illumination unit 42 when the illuminance of the surrounding environment is low (at night or during travelling in a tunnel, etc.). Further, the illumination control unit 43 may set the luminous intensity of the illumination unit 42 to a predetermined luminous intensity based on not only the illuminance of the surrounding environment of the vehicle 1 but also the information as to whether pedestrians or other vehicles exist around the vehicle 1.

Meanwhile, although the luminous intensity of the illumination unit 42 is adjusted in Steps S21, S22, instead of this, the light emitting area of the illumination unit 42 may be adjusted. In this case, the light emitting area of the illumination unit 42 is decreased in Step S21, and the light emitting area of the illumination unit 42 is increased in Step S22.

In the first embodiment, as an example of the change in the illumination state of the illumination unit 42, the changes in the turn on/off of light emitting areas, the illumination color, the blinking cycle and the luminous intensity of the illumination unit 42 have been described, respectively. However, the change in the illumination state is not limited to these. Various changes in the illumination state can be applied, so long as the illumination state of the illumination unit 42 can be changed in accordance with the driving mode of the vehicle 1. For example, the illumination state of the illumination unit 42 may be changed by combining the turn on/off of light emitting areas, the illumination color, the blinking cycle and the luminous intensity of the illumination unit 42.

Further, the illumination control unit 43 may predict the lifetime of the illumination unit 42 based on a current value and a voltage value of a lighting control circuit constituting the illumination control unit 43 and the temperature and humidity inside the illumination unit 42, and change the illumination state (the turn on/off of light emitting areas, the illumination color, the blinking cycle and the luminous intensity) of the illumination unit based on the predicted lifetime of the illumination unit 42. For example, when it is predicted that the predicted lifetime of the illumination unit 42 is short (e.g., the predicted lifetime is 100 hours or less), the illumination control unit 43 may set the illumination color of the illumination unit 42 to a first illumination color (e.g., red). Further, when the predicted lifetime of the illumination unit 42 is within a predetermined range (e.g., the predicted lifetime is in the range of 100 hours to 500 hours), the illumination control unit 43 may set the illumination color of the illumination unit 42 to a second illumination color (e.g., yellow). Furthermore, when it is predicted that the predicted lifetime of the illumination unit 42 is long (e.g., the predicted lifetime is 500 hours or more), the illumination control unit 43 may set the illumination color of the illumination unit 42 to a third illumination color (e.g., green). Meanwhile, instead of the illumination control unit 43, the vehicle control unit 3 may predict the lifetime of the illumination unit 42. In this case, the illumination control unit 43 may receive data indicating the predicted lifetime of the illumination unit 42 from the vehicle control unit 3 and then change the illumination state of the illumination unit 42 based on the received data.

Here, a temperature sensor configured to measure the internal temperature of the illumination unit 42 and a humidity sensor configured to measure the internal humidity of the illumination unit 42 may be provided inside the illumination unit 42.

Next, an example of predicting the lifetime of the illumination unit 42 (in particular, the light emitting element provided in the illumination unit 42) based on the internal temperature of the illumination unit 42 will be described below. In this case, a lifetime prediction formula indicating the relationship between a use time t of the light emitting element and a luminance L of the light emitting element may be stored in a memory of the illumination control unit 43. The illumination control unit 43 may determine the predicted lifetime of the illumination unit 42 based on the lifetime prediction formula and the current luminance L of the light emitting element. Further, the lifetime prediction formula stored in the memory may be acquired from a server arranged on a communication network via the wireless communication unit 10. In this case, the illumination control unit 43 may periodically acquire the updated lifetime prediction formula from the server arranged on the communication network. For example, when the lifetime prediction formula stored in the memory is a lifetime prediction formula based on the indoor temperature of 30 degrees and the internal temperature of the illumination unit 42 acquired from the temperature sensor is 50 degrees, the illumination control unit 43 may acquire the lifetime prediction formula based on the indoor temperature of 50 degrees from the server and then determine the predicted lifetime of the illumination unit 42 based on the acquired lifetime prediction formula based on the indoor temperature of 50 degrees and the current luminance L of the light emitting element. In this way, a suitable lifetime prediction formula can be acquired via the communication network, so that the lifetime of the illumination unit 42 can be predicted more accurately. Furthermore, the illumination control unit 43 changes the illumination state of the illumination unit 42 in accordance with the predicted lifetime of the illumination unit 42, and thus, it is possible to present the information relating to the lifetime of the illumination unit 42 toward the outside of the vehicle. In this manner, pedestrians or the like existing outside the vehicle can grasp the lifetime of the illumination unit 42 by visually recognizing the illumination state of the illumination unit 42.

Further, the illumination control unit 43 may change the illumination state (the turn on/off of light emitting areas, the illumination color, the blinking cycle and the luminous intensity) of the illumination unit 42 based on the current condition of a driver. For example, in the case where one of the plurality of cameras 6 is configured to capture the driver, the vehicle control unit 3 may acquire the captured image of the driver from the camera 6 and then determine the current condition of the driver based on the acquired captured image and a face recognition algorithm. Here, when it is determined that the driver cannot drive (e.g., when it is determined that the driver is dozing), the vehicle control unit 3 generates a predetermined illumination control signal and then transmits the predetermined illumination control signal to the illumination control unit 43. The illumination control unit 43 may set the illumination color of the illumination unit 42 to a predetermined illumination color (e.g., red) based on the predetermined illumination control signal. In this manner, it is possible to present the information relating to the current condition of the driver toward the outside of the vehicle.

Further, in the first embodiment, the illumination state of the illumination unit 42 is changed in accordance with the driving mode of the vehicle 1. However, in addition to the illumination unit 42, a speaker (not shown) may be provided so that the sound outputted from the speaker is changed in accordance with the driving mode of the vehicle 1. For example, the speaker may be installed at a predetermined position of the vehicle so as to output the sound indicating the motion mode of the vehicle 1 toward the outside of the vehicle. In this case, a speaker control unit (not shown) configured to control the speaker may store the data relating to the sound indicating the motion mode of the vehicle 1. Specifically, the speaker control unit may store the data relating to the pitch, magnitude, rhythm, voice, melody and voice guidance of the sound indicating the motion mode of the vehicle 1. The speaker control unit receives a mode signal indicating the driving mode of the vehicle 1 from the vehicle control unit 3 and then determines the sound (e.g., the pitch, magnitude, rhythm, voice, melody and voice guidance of the sound) to be outputted to the speaker in accordance with the received mode signal. Thereafter, the speaker control unit outputs the determined voice guidance to the speaker. By using the speaker in this way, the information indicating the driving mode of the vehicle 1 can be presented to pedestrians or other vehicles or the like existing outside the vehicle.

### <First Modification>

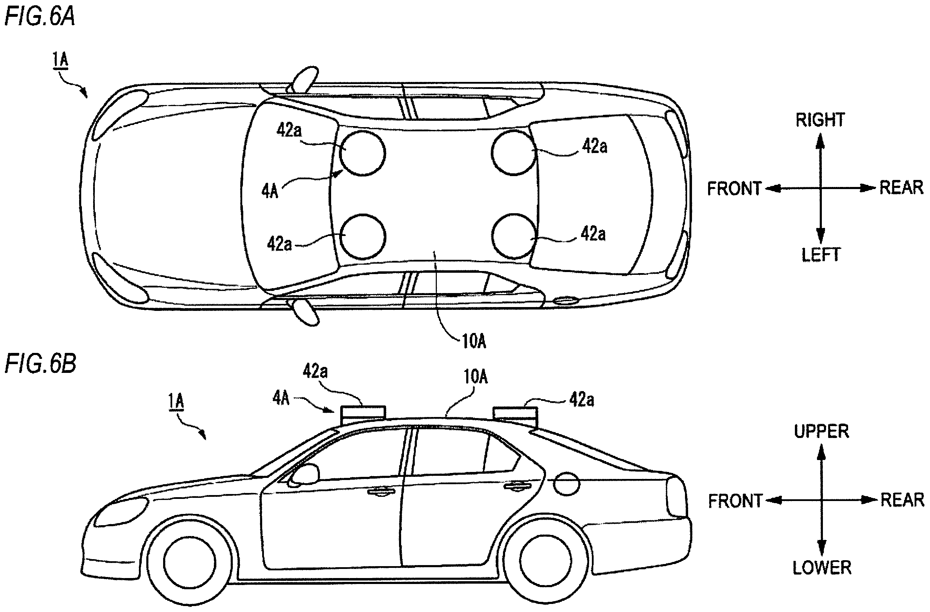

Next, an illumination device 4A according to a first modification of the first embodiment will be described with reference to FIGS. 6A and 6B. FIG. 6A shows a top view of a vehicle 1A on which the illumination device 4A is mounted, and FIG. 6B shows a side view of the vehicle 1A. The illumination device 4A includes a plurality of illumination units 42a shown in FIGS. 6A and 6B, and the illumination control unit 43 shown in FIG. 2. The illumination device 4A has the same configuration as the illumination device 4 according to the first embodiment except for the illumination unit.

As shown in FIG. 6A, each illumination unit 42a is disposed at one of four corners of a vehicle body roof 10A of the vehicle 1A. Further, each illumination unit 42a includes one or more light emitting elements such as an LED or laser and is configured to irradiate light toward the outside of the vehicle 1A. In this manner, since each illumination unit 42a is disposed at one of four corners of the vehicle body roof 10A, the plurality of illumination units 42a can irradiate light toward the outside of the vehicle 1A and over the entire circumference of the vehicle 1A in the horizontal direction.

Furthermore, the illumination device 4A can present the information relating to the automatic driving of the vehicle 1A toward the outside (in particular, pedestrians or other vehicles or the like around the vehicle 1A) of the vehicle 1A and over the entire circumference of the vehicle 1A in the horizontal direction.

### <Second Modification>

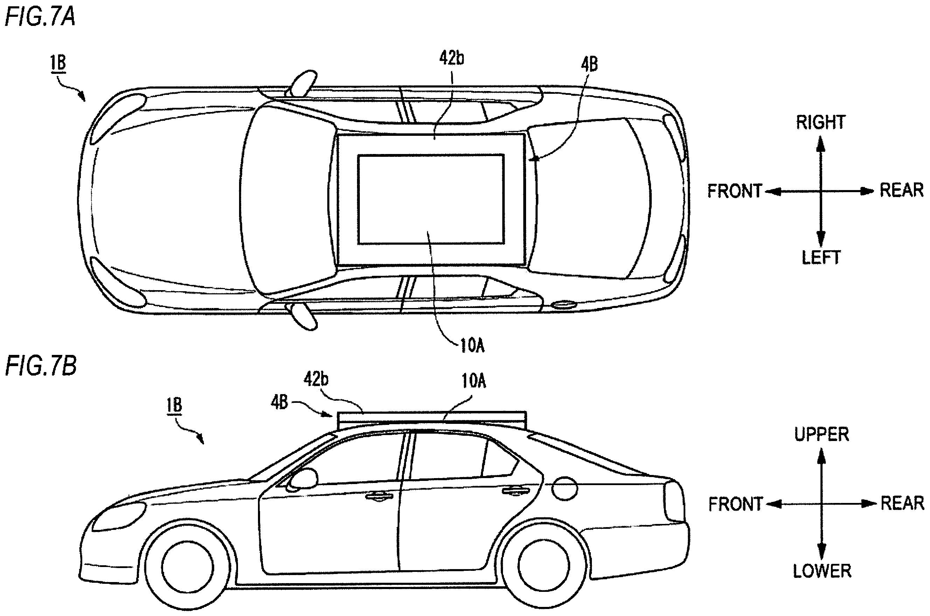

Next, an illumination device 4B according to a second modification of the first embodiment will be described with reference to FIGS. 7A and 7B. FIG. 7A shows a top view of a vehicle 1B on which the illumination device 4B is mounted, and FIG. 7B shows a side view of the vehicle 1B. The illumination device 4B includes an illumination unit 42b shown in FIGS. 7A and 7B, and the illumination control unit 43 shown in FIG. 2. The illumination device 4B has the same configuration as the illumination device 4 according to the first embodiment except for the illumination unit.

As shown in FIG. 7A, the illumination unit 42b has a frame shape in a top view and is disposed along an end edge of the vehicle body roof 10A of the vehicle 1B. Further, the illumination unit 42b includes a plurality of light emitting elements such as an LED or laser provided along its extending direction and is configured to irradiate light toward the outside of the vehicle 1B. In this manner, since the illumination unit 42b is disposed along the end edge of the vehicle body roof 10A and the plurality of light emitting elements are provided along the extending direction of the illumination unit 42b, the illumination unit 42b can irradiate light toward the outside of the vehicle 1B and over the entire circumference of the vehicle 1B in the horizontal direction.

Furthermore, the illumination device 4B can present the information relating to the automatic driving of the vehicle 1B toward the outside (in particular, pedestrians or other vehicles or the like around the vehicle 1B) of the vehicle 1B and over the entire circumference of the vehicle 1B in the horizontal direction.

Meanwhile, in the present modification, instead of providing a plurality of light emitting elements along the extending direction of the illumination unit 42b, an optical system including a light source (not shown) disposed in the vehicle body roof 10A, a plurality of MEMS (Micro Electro Mechanical Systems) mirrors (not shown) disposed inside the illumination unit 42b and a plurality of optical fibers for optically connecting the light source and the plurality of MEMS mirrors may be utilized. In this way, the illumination unit 42b which irradiates light toward the outside of the vehicle 1B and over the entire circumference of the vehicle 1B in the horizontal direction can be realized.

### <Third Modification>

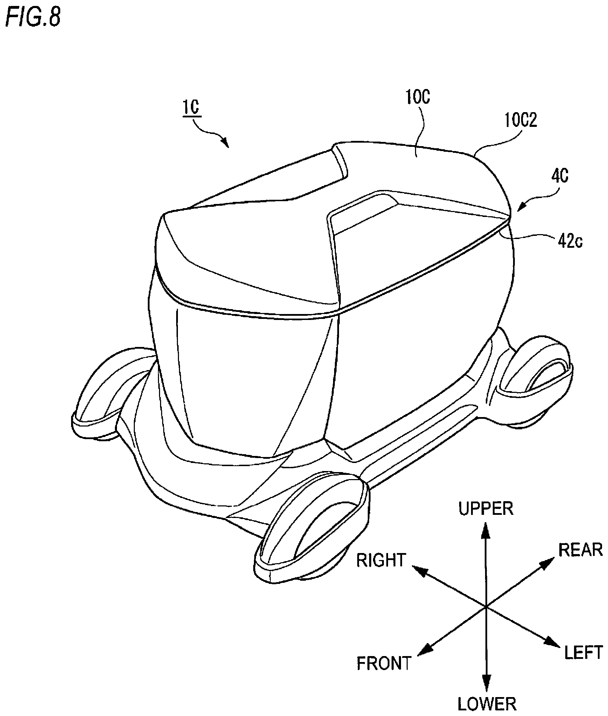

Next, an illumination device 4C according to a third modification of the first embodiment will be described with reference to FIG. 8. FIG. 8 shows a perspective view of a vehicle 1C on which the illumination device 4C is mounted. The illumination device 4C includes an illumination unit 42c shown in FIG. 8 and the illumination control unit 43 shown in FIG. 2. The illumination device 4C has the same configuration as the illumination device 4 according to the first embodiment except for the illumination unit.

As shown in FIG. 8, the illumination unit 42c has a continuous annular shape and is disposed along an outer peripheral edge 10C2 of a vehicle body roof 10C of the vehicle 1C. Further, the illumination unit 42c includes a plurality of light emitting elements such as an LED or laser provided along its extending direction and is configured to irradiate light toward the outside of the vehicle 1C. In this manner, since the illumination unit 42c is disposed along the outer peripheral edge 10C2 of the vehicle body roof 10C and the plurality of light emitting elements are provided along the extending direction of the illumination unit 42c, the illumination unit 42c can irradiate light toward the outside of the vehicle 1C and over the entire circumference of the vehicle 1C in the horizontal direction.

Furthermore, the illumination device 4C can present the information relating to the automatic driving of the vehicle 1C toward the outside (pedestrians or other vehicles or the like around the vehicle 1C) of the vehicle 1C and over the entire circumference of the vehicle 1C in the horizontal direction.

Meanwhile, in the present modification, for example, the illumination unit 42c which irradiates light toward the outside of the vehicle 1C and over the entire circumference of the vehicle 1C in the horizontal direction may be realized by a light source (not shown) disposed inside the vehicle body roof 10C and a plurality of optical fibers (not shown) for optically connecting the light source and the illumination unit 42c, instead of providing a plurality of light emitting elements along the extending direction of the illumination unit 42c.

### (Second Embodiment)

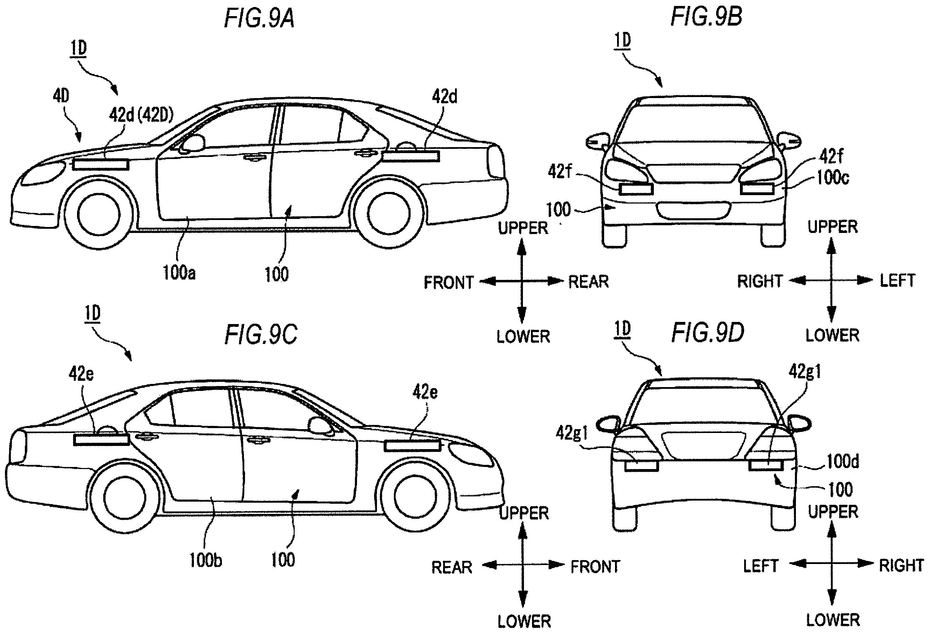

Next, an illumination device 4D according to a second embodiment will be described with reference to FIGS. 9A to 9D. FIG. 9A shows a left side view of a vehicle 1D, and FIG. 9B shows a front view of the vehicle 1D. FIG. 9C shows a right side view of the vehicle 1D. FIG. 9D shows a rear view of the vehicle 1D. The vehicle 1D is an automobile capable of travelling in an automatic driving mode and includes the illumination device 4D. The illumination device 4D has an illumination unit 42D and the illumination control unit 43 (see FIG. 2), and the illumination unit 42D of the illumination device 4D is disposed on a vehicle body side surface 100 of the vehicle 1 (see FIGS. 9A to 9D). The illumination device 4D has the same configuration as the illumination device 4 according to the first embodiment except for the illumination unit.

Specifically, as shown in FIGS. 9A to 9D, the illumination unit 42D includes illumination parts 42d, 42e, 42f and 42g1. Further, the vehicle body side surface 100 has a left surface 100a, a right surface 100b, a front surface 100c, and a rear surface 100d. Two illumination parts 42d (first illumination part) are arranged on the left surface 100a of the vehicle 1D. Two illumination parts 42e (second illumination part) are arranged on the right surface 100b of the vehicle 1D. Two illumination parts 42f (third illumination part) are arranged on the front surface 100c of the vehicle 1D. Two illumination parts 42g1 (fourth illumination part) are arranged on the rear surface 100d of the vehicle 1D. Further, each of the illumination parts 42d to 42g1 includes one or more light emitting elements such as an LED or laser and is configured to irradiate light toward the outside of the vehicle 1D.

In this manner, since the illumination unit 42D includes the illumination parts 42d to 42g1, the illumination unit 42D is configured to irradiate light toward the outside of the vehicle 1D and over the entire circumference (360 degrees) of the illumination unit 42D in the horizontal direction.

### <First Modification>

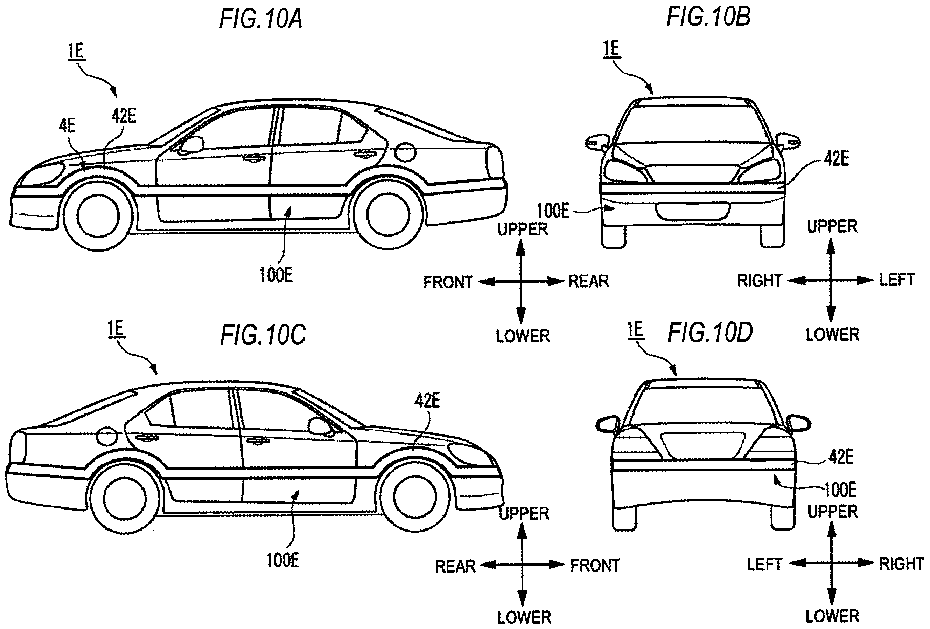

Next, an illumination device 4E according to a first modification of the second embodiment will be described with reference to FIGS. 10A to 10D. FIG. 10A shows a left side view of the vehicle 1E on which the illumination device 4E is mounted, and FIG. 10B shows a front view of the vehicle 1E. FIG. 10C shows a right side view of the vehicle 1E. FIG. 10D shows a rear view of the vehicle 1E. The illumination device 4E includes an illumination unit 42E shown in FIGS. 10A to 10D, and the illumination control unit 43 shown in FIG. 2. The illumination device 4E has the same configuration as the illumination device 4 according to the first embodiment except for the illumination unit.

As shown in FIGS. 10A to 10D, the illumination unit 42E is disposed on a vehicle body side surface 100E so as to surround the vehicle body side surface 100E of the vehicle 1E over the entire circumferential direction. The illumination unit 42E includes a plurality of light emitting elements such as an LED or laser provided along its extending direction and is configured to irradiate light toward the outside of the vehicle 1E. In this manner, since the illumination unit 42E is disposed so as to surround the vehicle body side surface 100E and the plurality of light emitting elements are provided along the extending direction of the illumination unit 42E, the illumination unit 42E can irradiate light toward the outside of the vehicle 1E and over the entire circumference of the vehicle 1E in the horizontal direction. Meanwhile, in FIGS. 10A to 10D, the illumination unit 42E is disposed so as to surround the vehicle body side surface 100E continuously (without being interrupted). However, the illumination unit 42E may be disposed so as to surround the vehicle body side surface 100E in a noncontinuous manner.

Further, since the illumination control unit 43 is configured to set the illumination state of the illumination unit 42E to a predetermined illumination state in accordance with the information relating to the automatic driving of the vehicle 1E, the illumination device 4E can present the information relating to the automatic driving of the vehicle 1E toward the outside (in particular, pedestrians or other vehicles or the like around the vehicle 1E) of the vehicle 1E and over the entire circumference of the vehicle 1E in the horizontal direction.

### <Second Modification>

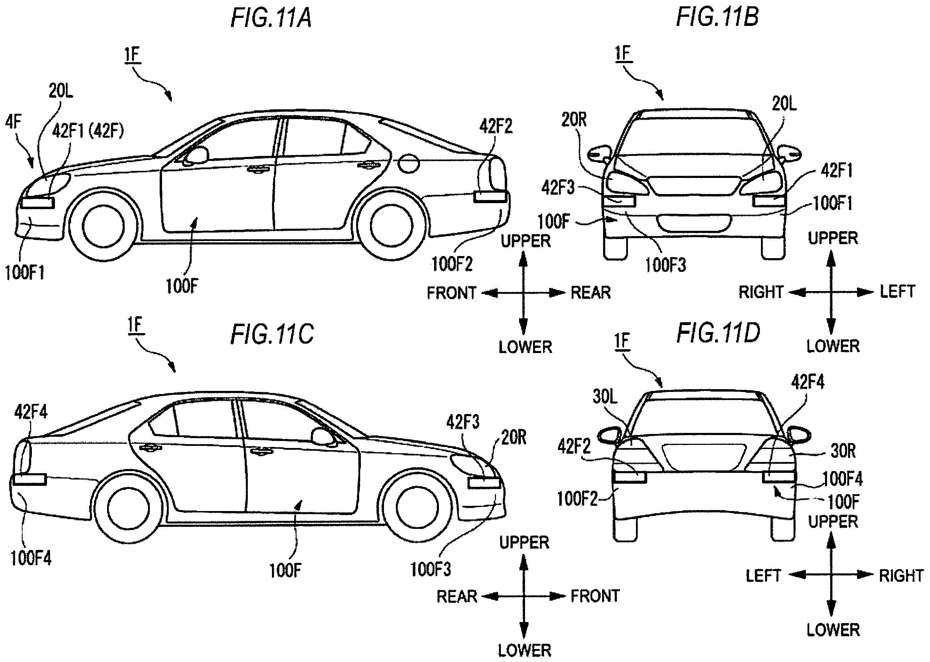

Next, an illumination device 4F according to a second modification of the second embodiment will be described with reference to FIGS. 11A to 11D. FIG. 11A shows a left side view of a vehicle 1F on which the illumination device 4F is mounted, and FIG. 11B shows a front view of the vehicle 1F. FIG. 11C shows a right side view of the vehicle 1F. FIG. 11D shows a rear view of the vehicle 1F. The illumination device 4F includes an illumination unit 42F shown in FIGS. 11A to 11D and the illumination control unit 43 shown in FIG. 2. The illumination unit 42F of the illumination device 4F is disposed on a vehicle body side surface 100F of the vehicle 1F. The illumination device 4F has the same configuration as the illumination device 4 according to the first embodiment except for the illumination unit.

Specifically, as shown in FIGS. 11A to 11D, the illumination unit 42F includes illumination parts 42F1 to 42F4. The illumination part 42F1 is disposed on a corner portion 100F1 of the vehicle body side surface 100F. The illumination part 42F2 is disposed on a corner portion 100F2 of the vehicle body side surface 100F. The illumination part 42F3 is disposed on a corner portion 100F3 of the vehicle body side surface 100F. The illumination part 42F4 is disposed on a corner portion 100F4 of the vehicle body side surface 100F. Further, each of the illumination parts 42F1 to 42F includes one or more light emitting elements such as an LED or laser and is configured to irradiate light toward the outside of the vehicle 1F.

In this manner, since each of the illumination parts 42F1 to 42F4 is disposed at a corresponding one of the four corners of the vehicle body side surface 100F, the illumination unit 42F can irradiate light toward the outside of the vehicle 1F and over the entire circumference of the vehicle 1F in the horizontal direction. Furthermore, since the illumination control unit 43 is configured to set the illumination state of the illumination unit 42F to a predetermined illumination state in accordance with the information relating to the automatic driving of the vehicle 1F, the illumination device 4F can present the information relating to the automatic driving of the vehicle 1F toward the outside (in particular, pedestrians or other vehicles or the like around the vehicle 1F) of the vehicle 1F and over the entire circumference of the vehicle 1F in the horizontal direction.

Meanwhile, the illumination part 42F1 may be disposed in a left headlamp 20L and the illumination part 42F2 may be disposed in a left rear combination lamp 30L. Similarly, the illumination part 42F3 may be disposed in a right headlamp 20R and the illumination part 42F4 may be disposed in a right rear combination lamp 30R. Also in this case, the illumination unit 42F can irradiate light toward the outside of the vehicle 1F and over the entire circumference of the vehicle 1F in the horizontal direction.

### (Third Embodiment)

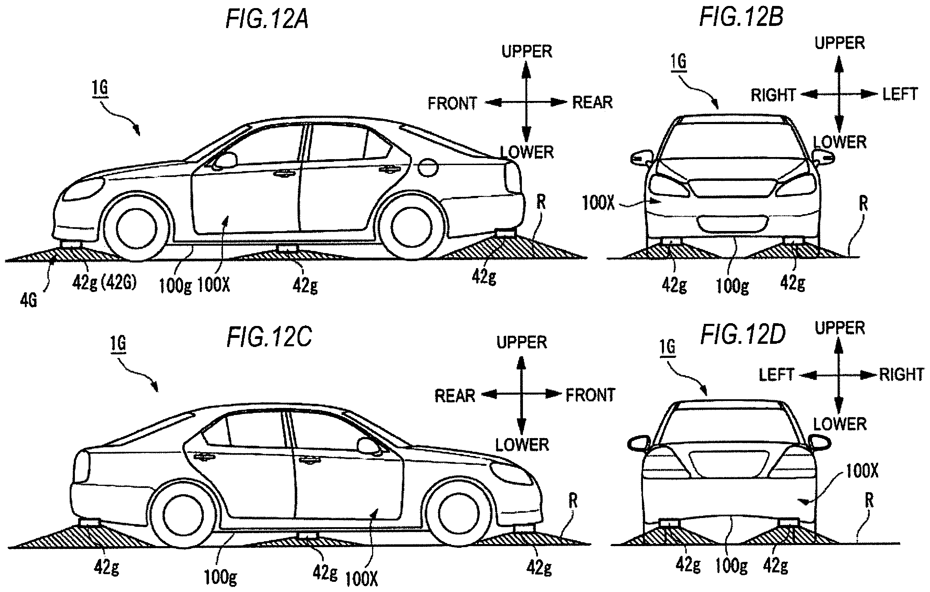

FIGS. 12A to 12D show a vehicle 1G on which an illumination device 4G according to a third embodiment is mounted. FIG. 12A shows a left side view of the vehicle 1G, and FIG. 12B shows a front view of the vehicle 1G. FIG. 12C shows a right side view of the vehicle 1G. FIG. 12D shows a rear view of the vehicle 1G. The vehicle 1G is an automobile capable of travelling in an automatic driving mode and includes the illumination device 4G. The illumination device 4G includes an illumination unit 42G and the illumination control unit 43 (see FIG. 2), and the illumination unit 42G of the illumination device 4G is disposed on a bottom surface 100g of a vehicle body 100X of the vehicle 1G (see FIGS. 12A to 12D). The bottom surface 100g faces a road surface R.

Specifically, as shown in FIGS. 12A to 12D, the illumination unit 42G includes a plurality of (six in this example) illumination parts 42g, and each of the illumination parts 42g is disposed on the bottom surface 100g of the vehicle body 100X. Each of the illumination parts 42g includes one or more light emitting elements such as an LED or laser and is configured to irradiate light toward the road surface R around the vehicle 1G.

In this manner, since the illumination unit 42G includes a plurality of illumination parts 42g, the illumination unit 42G is configured to irradiate light over the entire circumference (360 degrees) of the vehicle 1G in the horizontal direction via the road surface R. That is, the light irradiated directly from the plurality of illumination parts 42g of the illumination unit 42G is reflected by the road surface R. The reflected light reflected from the road surface R is irradiated toward the outside of the vehicle 1G and over the entire circumference of the vehicle 1G in the horizontal direction.

Meanwhile, in FIGS. 12A to 12D, three illumination parts 42g are arranged in a front-rear direction on the left side of the vehicle 1G, and the remaining three illumination parts 42g are arranged in the front-rear direction on the right side of the vehicle 1G. However, the number and arrangement of the illumination parts 42g are not particularly limited. The number and arrangement of the illumination parts 42g can be appropriately changed, so long as the illumination unit 42G can irradiate light over the entire circumference of the vehicle 1G via the road surface R. For example, a plurality of illumination parts 42g may be arranged at an end portion (the boundary between the vehicle body side surface and the vehicle body bottom surface) of the bottom surface 100g.

Although the embodiments of the present invention have been described above, it goes without saying that the technical scope of the present invention should not be interpreted limitedly by the description of these embodiments. It will be understood by those skilled in the art that these embodiments are merely examples and that various modifications can be made within the scope of the invention defined in the claims.

In each of the embodiments, the driving mode of the vehicle includes the fully automatic driving mode, the advanced driving support mode, the driving support mode, and the manual driving mode.

The classification and display form of the driving mode of the vehicle may be appropriately changed in accordance with the laws and regulations pertaining to the automatic driving in each country. Similarly, the definitions of "the fully automatic driving mode," "the advanced driving support mode," and "the driving support mode" described in the description of these embodiments are merely examples, and these definitions may be appropriately changed in accordance with the laws and regulations pertaining to the automatic driving in each country.

Further, in each of the embodiments, the process of setting the illumination state of the illumination unit 42 to the illumination states S1 to S4 in accordance with the driving mode of the vehicle 1 has been described while making reference to the driving mode of the vehicle 1 as an example of the information relating to the automatic driving of the vehicle 1. However, the embodiment of the present invention is not limited thereto. The illumination control unit 43 may set the illumination state (the turn on/off of light emitting areas, the illumination color, the blinking cycle and the luminous intensity) of the illumination unit 42 to a predetermined illumination state in accordance with the following information. In this manner, the vehicle illumination device configured to display the following information relating to the automatic driving should naturally be included in the technical scope of the present invention.
· Information indicating that the vehicle is travelling in the fully automatic driving mode in a state where no occupant exists in a driver's seat of the vehicle
· Information indicating that the vehicle is travelling in the fully automatic driving mode in a state where an occupant exists in the vehicle
· Stop Warning Information forewarning the stop of the vehicle
· Information indicating that the automatic driving control of the vehicle is in an abnormal state
· Information indicating whether it is possible to ride on the vehicle travelling in the fully automatic driving mode
· Information indicating the abnormality of a component (brake, tire, etc.) of the vehicle
· Information indicating whether the vehicle is connected to a communication network
· Information indicating the abnormality of a camera, a radar, etc.
· Information indicating the abnormality in occupant's vital sign
· Information indicating the capacity of a battery mounted on the vehicle.

## Claims

1. A vehicle (1, 1A, 1B, 1C, 1D, 1E, 1F, 1G) capable of travelling in an automatic driving mode and comprising a vehicle system (2) and a vehicle illumination device (4, 4A, 4B, 4C, 4D, 4E, 4F, 4G) configured to display information relating to automatic driving of the vehicle (1, 1A, 1B, 1C, 1D, 1E, 1F, 1G) toward an outside of the vehicle, the vehicle illumination device comprising an illumination unit (42, 42a, 42b, 42c, 42D, 42E, 42F, 42G) configured to irradiate light toward the outside of the vehicle and over an entire circumference of the vehicle in a horizontal direction,
the vehicle **characterized in that** it is capable of travelling in four driving modes including:
- a fully automatic driving mode in which the vehicle system (2) automatically performs all of the travelling controls of the steering control, the brake control and the accelerator control and the driver is not in a state where it is possible to drive the vehicle;
- an advanced driving support mode in which the vehicle system (2) automatically performs all of the travelling controls of the steering control, the brake control and the accelerator control, and the driver does not drive the vehicle;
- a driving support mode in which the vehicle system (2) automatically performs a part of the travelling controls of the steering control, the brake control and the accelerator control, and the driver drives the vehicle under the driving support of the vehicle system; and
- a manual driving mode in which the vehicle system (2) does not automatically perform the travelling controls, and the driver drives the vehicle without the driving support of the vehicle system,
**in that** the vehicle illumination unit (42, 42a, 42b, 42c, 42D, 42E, 42F, 42G) is configured to adopt a different illumination state (S 1-S4) for each of the four driving modes, and
**in that** the information relating to the automatic driving of the vehicle includes information indicating a transition state of a driving mode of the vehicle (1, 1A, 1B, 1C, 1D, 1E, 1F, 1G).

2. The vehicle according to claim 1, wherein the vehicle illumination device further comprises:
an illumination control unit (43) configured to set an illumination state of the illumination unit (42, 42a, 42b, 42c, 42D, 42E, 42F, 42G) to a predetermined illumination state in accordance with the information relating to the automatic driving of the vehicle (1, 1A, 1B, 1C, 1D, 1E, 1F, 1G).

3. The vehicle according to claim 2, wherein the illumination control unit (43) is configured to turn on or turn off predetermined light emitting areas of the illumination unit (42, 42a, 42b, 42c, 42D, 42E, 42F, 42G) in accordance with the driving mode of the vehicle (1, 1A, 1B, 1C, 1D, 1E, 1F, 1G).

4. The vehicle according to claim 1, wherein the vehicle illumination device further comprises:
an illumination control unit (43) configured to set an illumination state of the illumination unit (42, 42a, 42b, 42c, 42D, 42E, 42F, 42G) to a predetermined illumination state in accordance with illuminance of surrounding environment of the vehicle (1, 1A, 1B, 1C, 1D, 1E, 1F, 1G).

5. The vehicle according to any one of claims 1 to 4, wherein the illumination unit (42, 42a, 42b, 42c) is disposed on a vehicle body roof (10A, 10C) of the vehicle (1, 1A, 1B, 1C).

6. The vehicle according (4D, 4E, 4F) to any one of claims 1 to 4, wherein the illumination unit (42D, 42E, 42F) is disposed on a vehicle body side surface (100, 100E, 100F) of the vehicle (1D, 1E, 1F).

7. The vehicle according to claim 6, wherein the illumination unit (42D) includes:
a first illumination part (42d) disposed on a left surface (100a) of the vehicle (1D);
a second illumination part (42e) disposed on a right surface (100b) of the vehicle (1D);
a third illumination part (42f) disposed on a front surface (100c) of the vehicle (1D); and
a fourth illumination part (42g1) disposed on a rear surface (100d) of the vehicle (1D).

8. The vehicle according to claim 6, wherein the illumination unit (42E) is arranged to surround the vehicle body side surface (100E).

9. The vehicle according to claim 6, wherein the illumination unit (42F) includes a plurality of illumination parts (42F1, 42F2, 42F3, 42F4), and
wherein each of the plurality of illumination parts (42F1, 42F2, 42F3, 42F4) is disposed at a corresponding one of four corners (100F1, 100F2, 100F3, 100F4) of the vehicle body side surface (100F).

10. The vehicle according to any one of claims 1 to 4,
wherein the illumination unit (42G) is disposed on a bottom surface (100g) of the vehicle (1G) facing a road surface, and
wherein the illumination unit (42G) is configured to irradiate light over the entire circumference in the horizontal direction via the road surface.

## Patentansprüche

1. Fahrzeug (1, 1A, 1B, 1C, 1D, 1E, 1F, 1G), das in der Lage ist, in einem automatischen Fahrmodus zu fahren, und ein Fahrzeugsystem (2) und eine Fahrzeug-Beleuchtungsvorrichtung (4, 4A, 4B, 4C, 4D, 4E, 4F, 4G) umfasst, die dazu ausgestaltet ist, Informationen in Bezug auf die automatische Fahrt des Fahrzeugs (1, 1A, 1B, 1C, 1D, 1E, 1F, 1G) zu einer Außenseite des Fahrzeugs hin anzuzeigen, wobei die Fahrzeug-Beleuchtungsvorrichtung eine Beleuchtungseinheit (42, 42a, 42b, 42c, 42D, 42E, 42F, 42G) umfasst, die dazu ausgestaltet ist, Licht zu der Außenseite des Fahrzeugs hin und über einen gesamten Umfang des Fahrzeugs in einer horizontalen Richtung auszustrahlen,
wobei das Fahrzeug **dadurch gekennzeichnet ist, dass** es in der Lage ist, in vier Fahrmodi zu fahren, die beinhalten:
- einen vollautomatischen Fahrmodus, in welchem das Fahrzeugsystem (2) automatisch alle Fahrtsteuerungen der Lenksteuerung, der Bremssteuerung und der Beschleunigungssteuerung durchführt und der Fahrer nicht in einem Zustand ist, in dem es möglich ist, das Fahrzeug zu fahren,
- einen erweiterten Fahrtunterstützungsmodus, in dem das Fahrzeugsystem (2) automatisch alle Fahrtsteuerungen der Lenksteuerung, der Bremssteuerung und der Beschleunigungssteuerung durchführt, und der Fahrer das Fahrzeug nicht fährt,
- einen Fahrtunterstützungsmodus, in dem das Fahrzeugsystem (2) automatisch einen Teil der Fahrtsteuerungen der Lenksteuerung, der Bremssteuerung und der Beschleunigungssteuerung durchführt, und der Fahrer das Fahrzeug mit der Fahrtunterstützung des Fahrzeugsystems fährt, und
- einen manuellen Fahrtmodus, in dem das Fahrzeugsystem (2) die Fahrtsteuerungen nicht automatisch durchführt, und der Fahrer das Fahrzeug ohne die Fahrtunterstützung des Fahrzeugsystems fährt,
dass die Fahrzeug-Beleuchtungseinheit (42, 42a, 42b, 42c, 42D, 42E, 42F, 42G) dazu ausgestaltet ist, für jeden der vier Fahrmodi einen unterschiedlichen Beleuchtungszustand (S1-S4) anzunehmen, und
dass die Informationen in Bezug auf die automatische Fahrt des Fahrzeugs Informationen beinhalten, die einen Übergangszustand eines Fahrmodus des Fahrzeugs (1, 1A, 1B, 1C, 1D, 1E, 1F, 1G) angeben.

2. Fahrzeug nach Anspruch 1, wobei die Fahrzeug-Beleuchtungsvorrichtung ferner umfasst:
eine Beleuchtungs-Steuereinheit (43), die dazu ausgestaltet ist, einen Beleuchtungszustand der Beleuchtungseinheit (42, 42a, 42b, 42c, 42D, 42E, 42F, 42G) in Übereinstimmung mit den Informationen in Bezug auf die automatische Fahrt des Fahrzeugs (1, 1A, 1B, 1C, 1D, 1E, 1F, 1G) auf einen vorbestimmten Beleuchtungszustand einzustellen.

3. Fahrzeug nach Anspruch 2, wobei die Beleuchtungs-Steuereinheit (43) dazu ausgestaltet ist, vorbestimmte lichtabstrahlende Bereiche der Beleuchtungseinheit (42, 42a, 42b, 42c, 42D, 42E, 42F, 42G) in Übereinstimmung mit dem Fahrmodus des Fahrzeugs (1, 1A, 1B, 1C, 1D, 1E, 1F, 1G) einzuschalten oder auszuschalten.

4. Fahrzeug nach Anspruch 1, wobei die Fahrzeug-Beleuchtungsvorrichtung ferner umfasst:
eine Beleuchtungs-Steuereinheit (43), die dazu ausgestaltet ist, einen Beleuchtungszustand der Beleuchtungseinheit (42, 42a, 42b, 42c, 42D, 42E, 42F, 42G) in Übereinstimmung mit der Beleuchtungsstärke einer umliegenden Umgebung des Fahrzeugs (1, 1A, 1B, 1C, 1D, 1E, 1F, 1G) auf einen vorbestimmten Beleuchtungszustand einzustellen.

5. Fahrzeug nach einem der Ansprüche 1 bis 4, wobei die Beleuchtungseinheit (42, 42a, 42b, 42c) auf einem Fahrzeugkörperdach (10A, 10C) des Fahrzeugs (1, 1A, 1B, 1C) angeordnet ist.

6. Fahrzeug nach einem der Ansprüche 1 bis 4, wobei die Beleuchtungseinheit (42D, 42E, 42F) auf einer seitlichen Oberfläche (100, 100E, 100F) des Fahrzeugkörpers des Fahrzeugs (1D, 1E, 1F) angeordnet ist.

7. Fahrzeug nach Anspruch 6, wobei die Beleuchtungseinheit (42D) beinhaltet:
einen ersten Beleuchtungsteil (42d), der auf einer linken Oberfläche (100a) des Fahrzeugs (1D) angeordnet ist,
einen zweiten Beleuchtungsteil (42e), der auf einer rechten Oberfläche (100b) des Fahrzeugs (1D) angeordnet ist,
einen dritten Beleuchtungsteil (42f), der auf einer vorderen Oberfläche (100c) des Fahrzeugs (1D) angeordnet ist, und
einen vierten Beleuchtungsteil (42g1), der auf einer hinteren Oberfläche (100d) des Fahrzeugs (1D) angeordnet ist.

8. Fahrzeug nach Anspruch 6, wobei die Beleuchtungseinheit (42E) so angeordnet ist, dass sie die seitliche Oberfläche (100E) des Fahrzeugkörpers umgibt.

9. Fahrzeug nach Anspruch 6, wobei die Beleuchtungseinheit (42F) mehrere Beleuchtungsteile (42F1, 42F2, 42F3, 42F4) beinhaltet, und
wobei jeder der mehreren Beleuchtungsteile (42F1, 42F2, 42F3, 42F4) an einer entsprechenden von vier Ecken (100F1, 100F2, 100F3, 100F4) der seitlichen Oberfläche (100F) des Fahrzeugkörpers angeordnet ist.

10. Fahrzeug nach einem der Ansprüche 1 bis 4,
wobei die Beleuchtungseinheit (42G) an einer unteren Oberfläche (100g) des Fahrzeugs (1G) angeordnet ist, die einer Straßenoberfläche zugewandt ist, und
wobei die Beleuchtungseinheit (42G) dazu ausgestaltet ist, Licht über den gesamten Umfang in der horizontalen Richtung über die Straßenoberfläche auszustrahlen.

## Revendications

1. Véhicule (1, 1A, 1B, 1C, 1D, 1E, 1F, 1G) apte à se déplacer dans un mode de conduite automatique et comprenant un système de véhicule (2) et un dispositif d'éclairage de véhicule (4, 4A, 4B, 4C, 4D, 4E, 4F, 4G) configuré pour afficher une information relative à une conduite automatique du véhicule (1, 1A, 1B, 1C, 1D, 1E, 1F, 1G) vers un extérieur du véhicule, le dispositif d'éclairage de véhicule comprenant une unité d'éclairage (42, 42a, 42b, 42c, 42D, 42E, 42F, 42G) configurée pour irradier une lumière vers l'extérieur du véhicule et sur une circonférence entière du véhicule dans une direction horizontale,
le véhicule **caractérisé en ce qu'**il est apte à se déplacer dans quatre modes de conduite incluant :
un mode de conduite complètement automatique dans lequel le système de véhicule (2) réalise automatiquement toutes les commandes de déplacement de la commande d'orientation, la commande de frein et la commande d'accélérateur et le conducteur n'est pas dans un état où il est possible de conduire le véhicule ;
un mode d'aide à la conduite avancé dans lequel le système de véhicule (2) réalise automatiquement toutes les commandes de déplacement de la commande d'orientation, la commande de frein et la commande d'accélérateur, et le conducteur ne conduit pas le véhicule ;
un mode d'aide à la conduite dans lequel le système de véhicule (2) réalise automatiquement une partie des commandes de déplacement de la commande d'orientation, la commande de frein et la commande d'accélérateur, et le conducteur conduit le véhicule avec l'aide à la conduite du système de véhicule ; et
un mode de conduite manuel dans lequel le système de véhicule (2) ne réalise pas automatiquement les commandes de déplacement, et le conducteur conduit le véhicule sans l'aide à la conduite du système de véhicule,
**en ce que** l'unité d'éclairage (42, 42a, 42b, 42c, 42D, 42E, 42F, 42G) est configurée pour adopter un état d'éclairage (S1-S4) différent pour chacun des quatre modes de conduite, et
**en ce que** l'information relative à la conduite automatique du véhicule inclut une information indiquant un état de transition d'un mode de conduite du véhicule (1, 1A, 1B, 1C, 1D, 1E, 1F, 1G).

2. Véhicule selon la revendication 1, dans lequel le dispositif d'éclairage de véhicule comprend en outre :
une unité de commande d'éclairage (43) configurée pour régler un état d'éclairage de l'unité d'éclairage (42, 42a, 42b, 42c, 42D, 42E, 42F, 42G) à un état d'éclairage prédéterminé en fonction de l'information relative à la conduite automatique du véhicule (1, 1A, 1B, 1C, 1D, 1E, 1F, 1G).

3. Véhicule selon la revendication 2, dans lequel l'unité de commande d'éclairage (43) est configurée pour allumer ou éteindre des zones d'émission de lumière prédéterminées de l'unité d'éclairage (42, 42a, 42b, 42c, 42D, 42E, 42F, 42G) en fonction du mode de conduite du véhicule (1, 1A, 1B, 1C, 1D, 1E, 1F, 1G).

4. Véhicule selon la revendication 1, dans lequel le dispositif d'éclairage de véhicule comprend en outre :
une unité de commande d'éclairage (43) configurée pour régler un état d'éclairage de l'unité d'éclairage (42, 42a, 42b, 42c, 42D, 42E, 42F, 42G) à un état d'éclairage prédéterminé en fonction de l'éclairement d'un environnement immédiat du véhicule (1, 1A, 1B, 1C, 1D, 1E, 1F, 1G).

5. Véhicule selon l'une quelconque des revendications 1 à 4, dans lequel l'unité d'éclairage (42, 42a, 42b, 42c) est disposée sur un toit de corps de véhicule (10A, 10C) du véhicule (1, 1A, 1B, 1C).

6. Véhicule selon l'une quelconque des revendications 1 à 4, dans lequel l'unité d'éclairage (42D, 42E, 42F) est disposée sur une surface latérale de corps de véhicule (100, 100E, 100F) du véhicule (1D, 1E, 1F).

7. Véhicule selon la revendication 6, dans lequel l'unité d'éclairage (42D) inclut :
une première partie d'éclairage (42d) disposée sur une surface gauche (100a) du véhicule (1D) ;
une deuxième partie d'éclairage (42e) disposée sur une surface droite (100b) du véhicule (1D) ;
une troisième partie d'éclairage (42f) disposée sur une surface avant (100c) du véhicule (1D) ; et
une quatrième partie d'éclairage (42g1) disposée sur une surface arrière (100d) du véhicule (1D).

8. Véhicule selon la revendication 6, dans lequel l'unité d'éclairage (42E) est agencée de façon à entourer la surface latérale de corps de véhicule (100E).

9. Véhicule selon la revendication 6, dans lequel l'unité d'éclairage (42F) inclut une pluralité de parties d'éclairage (42F1, 42F2, 42F3, 42F4), et
dans lequel chacune de la pluralité de parties d'éclairage (42F1, 42F2, 42F3, 42F4) est disposée en un coin correspondant parmi quatre coins (100F1, 100F2, 100F3, 100F4) de la surface latérale de corps de véhicule (100F).

10. Véhicule selon l'une quelconque des revendications 1 à 4,
dans lequel l'unité d'éclairage (42G) est disposée sur une surface inférieure (100g) du véhicule (1G) faisant face à une surface de route, et
dans lequel l'unité d'éclairage (42G) est configurée pour irradier une lumière sur la circonférence entière dans la direction horizontale via la surface de route.
